(19) Europäisches Patentamt
European Patent Office
Office européen des brevets

(11) Numéro de publication : **0 295 165 B1**

# (12) FASCICULE DE BREVET EUROPEEN

(45) Date de publication du fascicule du brevet :
**10.07.91 Bulletin 91/28**

(51) Int. Cl.⁵ : **G01D 11/28, B60K 37/00**

(21) Numéro de dépôt : **88401254.3**

(22) Date de dépôt : **24.05.88**

(54) Aiguille éclairante, en particulier pour tableaux de bord de véhicules automobiles.

(30) Priorité : **25.05.87 FR 8707316**

(43) Date de publication de la demande :
**14.12.88 Bulletin 88/50**

(45) Mention de la délivrance du brevet :
**10.07.91 Bulletin 91/28**

(84) Etats contractants désignés :
**DE ES GB IT SE**

(56) Documents cités :
**DE-A- 3 425 029**
**DE-A- 3 435 377**
**GB-A- 2 185 576**

(73) Titulaire : **JAEGER**
**2, rue Baudin**
**F-92303 Levallois-Perret (FR)**

(72) Inventeur : **Sadat, Idir**
**26, rue du Maine**
**F-95870 Bezons (FR)**

(74) Mandataire : **Martin, Jean-Jacques et al**
**Cabinet REGIMBEAU 26, Avenue Kléber**
**F-75116 Paris (FR)**

# Description

La présente invention concerne le domaine des aiguilles éclairantes.

La présente invention s'applique tout particulièrement, mais non exclusivement, à la conception de tableaux de bord de véhicules automobiles.

L'utilisation d'aiguilles éclairantes a pour fonction essentielle de faciliter l'observation des appareils indicateurs la nuit, ou d'une façon plus générale lorsque la lumière ambiante est déficiente.

Les aiguilles indicatrices sont généralement formées d'un moyeu destiné à être chassé sur un arbre de commande et supportant un corps d'aiguille allongé s'étendant de part et d'autre du moyeu, pour des raisons d'esthétique et d'équilibre.

On connaît deux types principaux d'aiguilles indicatrices.

Les aiguilles du premier type peuvent être réalisées en un matériau opaque sur le plan optique. Elles sont pourvues, sur leur surfaces avant visible, d'un revêtement coloré et sont associées à des sources lumineuses placées sur l'avant pour éclairer le revêtement en cas d'éclairage ambiant insuffisant. Ces aiguilles ont déjà rendu de grands services. Cependant, elles apparaissent peu lumineuses par comparaison avec les aiguilles dites éclairantes. De ce fait, elles ne donnent pas entière satisfaction quant à l'esthétique, l'agrément et la fiabilité de l'observation.

Les aiguilles du second type dites éclairantes sont formées pour l'essentiel d'un matériau transparent sur le plan optique et sont associées à des sources lumineuses placées latéralement ou sur l'arrière de l'aiguille pour injecter la lumière dans le corps de l'aiguille qui sert de guide de lumière. Les aiguilles dites éclairantes sont préférées de nos jours aux aiguilles du premier type précité.

La présente invention a pour but de proposer une aiguille éclairante adaptée pour être éclairée de façon uniforme sur toute sa longueur.

La Demanderesse a en effet constaté que la quasi totalité des aiguilles éclairantes jusqu'ici proposées ne sont pas éclairées sur toute leur longueur. Elles sont éclairées seulement au niveau de leurs portions avant et arrière placées de part et d'autre du moyeu. La zone du corps de l'aiguille placée en regard du moyeu n'est généralement pas éclairée. L'aiguille se présente donc sous forme de deux sections séparées. D'une part, l'esthétique de ces aiguilles laisse à désirer. D'autre part, celles-ci peuvent conduire à une lecture erronée.

Le document DE-A-3 425 029 évoque des tentatives de solutions au problème ainsi posé.

On a illustré sur la figure 1 annexée une première solution proposée par le document DE-A-3 425 029.

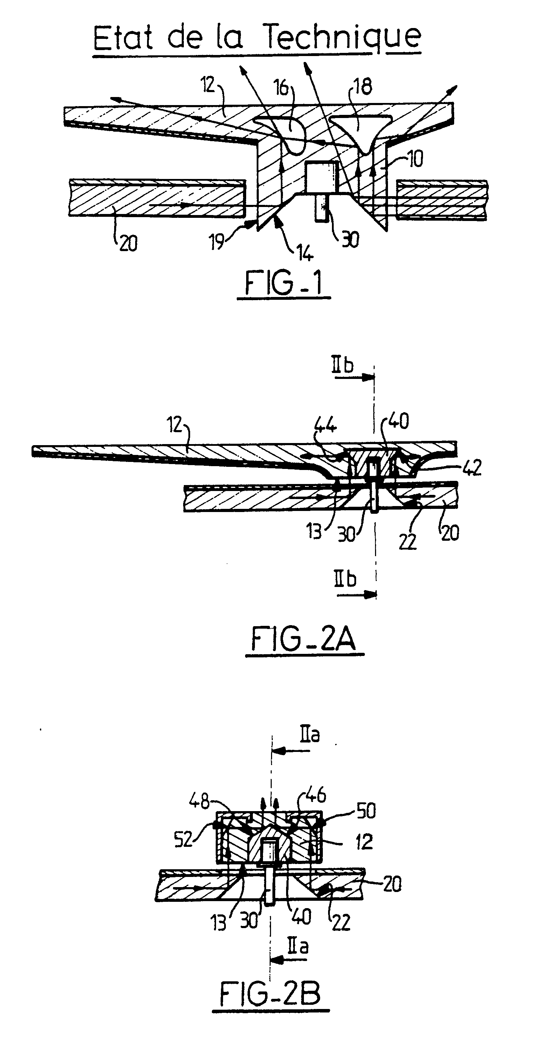

On aperçoit sur la figure 1 annexée une aiguille comprenant un moyeu 10 portant un corps d'aiguille 12. La base du moyeu 10 présente une surface conique concave 14. Le sommet du moyeu 10 est pourvu de cavités 16, 18 qui débouchent latéralement sur le corps de l'aiguille. L'aiguille est éclairée par un guide 20 qui entoure la base du moyeu 10. La lumière provenant du guide 10 traverse sans déviation la surface cylindrique externe 19 de l'aiguille. Elle atteint selon une incidence supérieure à l'incidence de réfraction maximale la surface conique concave 14. Elle est donc réfléchie vers le sommet du moyeu, parallèlement à l'axe de celui-ci. Une partie de la lumière est déviée par réflexion sur l'interface interne du moyeu 10/cavités 16 ou 18 vers l'avant et vers l'arrière, pour éclairer les zones correspondantes de l'aiguille. Une autre partie de la lumière passe entre les cavités 16, 18 ou est déviée par réfraction par celles-ci et atteint la zone du corps d'aiguille en regard du moyeu 10. Bien que susceptible de donner satisfaction en théorie, ces aiguilles ont pour l'instant été peu développées dans la pratique. Les cavités 16, 18 s'avèrent fort complexes à réaliser. Elles exigent l'utilisation de moules à tiroir. De plus, il s'avère dans la pratique difficile d'obtenir un éclairage homogène de l'aiguille par utilisation de telles cavités 16, 18.

On a illustré sur les figures 2A et 2B annexées une seconde solution proposée par le document DE-A-3 425 029.

La figure 2A annexée représente une coupe longitudinale de l'aiguille selon un plan référencé II-a sur la figure 2B. La figure 2B représente une vue en coupe transversale de la même aiguille selon un plan de coupe référencé II-b sur la figure 2A. Le moyeu 10 comprend un insert 40 destiné à être chassé sur un arbre de commande 30. L'insert 40 a une forme complexe. Il comprend deux faces transversales 42, 44 qui divergent vers le haut et deux faces longitudinales 46, 48 qui convergent vers le haut. Les faces 42, 44, 46 et 48 de l'insert 40 doivent présenter un poli quasi parfait pour être réfléchissantes. Le corps 12 de l'aiguille est surmoulé sur l'insert 40. Il possède en regard de l'insert 40 deux surfaces latérales longitudinales 50, 52 parallèles aux surfaces 46, 48 de l'insert 40. L'aiguille est éclairée par un guide 20 qui entoure l'arbre de commande 30. Le guide 20 possède une surface tronconique concave 22 qui diverge en éloignement de l'aiguille. La lumière provenant du guide 20 transversalement à l'axe de l'arbre 30 est réfléchie sur la surface tronconique 22 et renvoyée parallèlement à l'axe de l'arbre 30 vers l'aiguille. La lumière traverse sans déviation la surface inférieure 13 du corps de l'aiguille. Une partie de la lumière atteint les surfaces transversales 44, 42 de l'insert 40 et est de ce fait renvoyée longitudinalement vers l'avant et vers l'arrière de l'aiguille respectivement pour éclairer les zones correspondantes.

Une autre partie de la lumière traversant la surface inférieure 13 de l'aiguille atteint les surfaces 50, 52 ménagées sur le corps 12, selon une incidence supérieure à l'angle de réfraction maximum et est renvoyée par ces surfaces en direction des surfaces réfléchissantes 46, 48 prévues sur l'insert 40, soit transversalement à l'axe de l'arbre 30. Les surfaces réfléchissantes 46, 48 renvoient alors cette partie de la lumière parallèlement à l'axe de l'arbre 30, vers la surface supérieure de l'aiguille pour éclairer la zone centrale de celle-ci.

Là encore, bien que susceptibles de donner satisfaction en théorie, ces aiguilles n'ont pas été développées dans la pratique. Cette absence de commercialisation semble dûe au fait ces aiguilles requièrent des opérations de moulage et surmoulage particulièrement complexes car exigeant d'une part, un état de surface quasi parfait au niveau des surfaces réfléchissantes 42, 44, 46, 48 de l'insert 40, d'autre part, un positionnement extrêmement précis, lors du surmoulage, entre l'insert 40 et le corps 12.

La présente invention vient améliorer la situation en proposant une nouvelle aiguille éclairante comprenant :

– un corps moulé en matériau transparent comprenant, venu de moulage, un moyeu intermédiaire, et pourvu à proximité du moyeu de deux surfaces transversales opposées, servant de surfaces réfléchissantes, qui divergent vers la surface supérieure de l'aiguille, et

– une pièce auxiliaire de renvoi moulée, séparément du corps, en matériau transparent, comprenant une première paire de surfaces longitudinales supérieures, servant de surfaces réfléchissantes, qui convergent vers la surface supérieure de l'aiguille, une seconde paire de surfaces longitudinales inférieures, servant de surfaces réfléchissantes, qui divergent en éloignement de la surface supérieure de l'aiguille, et des moyens de fixation permettant d'immobiliser la pièce auxiliaire de renvoi avec précision sur le corps, à proximité du moyeu.

Comme cela sera expliqué par la suite, les surfaces transversales servant de surfaces réfléchissantes sur le corps permettent d'éclairer les parties avant et arrière de l'aiguille disposées de part et d'autre du moyeu. Les deux paires de surfaces longitudinales, servant de surfaces réfléchissantes, ménagées sur la pièce auxiliaire de renvoi servent à éclairer la partie centrale de l'aiguille, en regard du moyeu.

D'autres caractéristiques, buts et avantages de la présente invention apparaîtront à la lecture de la description détaillée qui va suivre, et en regard des dessins annexés donnés à titre d'exemple non limitatif et sur lesquels, les figures 1,2A et 2B qui illustrent l'état de la technique ayant déjà été décrites :

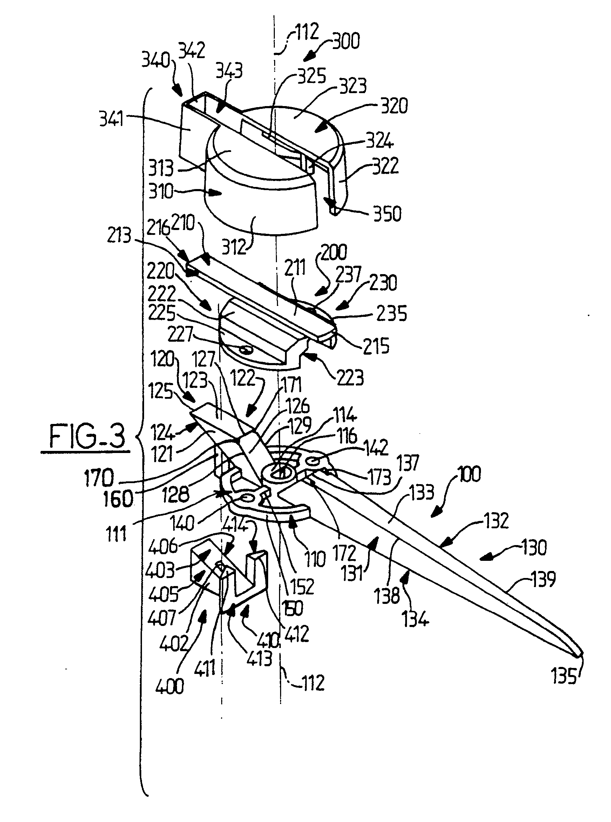

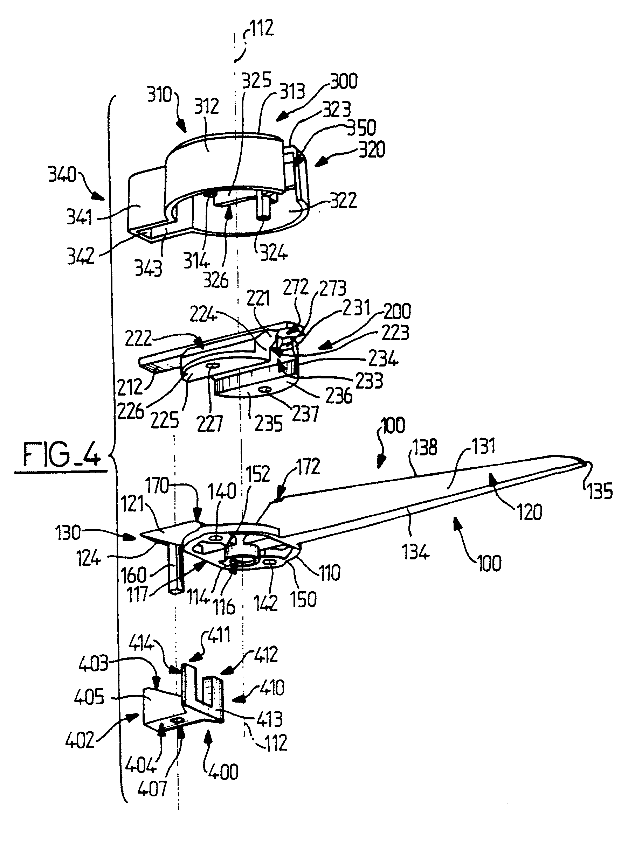

– les figures 3 et 4 représentent deux vues schématiques éclatées en perspective, respectivement supérieure et inférieure d'une aiguille éclairante conforme à la présente invention,

– la figure 5 représente une vue schématique en coupe longitudinale de la même aiguille éclairante, et

– la figure 6 représente une vue en coupe transversale de la même aiguille éclairante.

L'aiguille illustrée sur les figures annexées se compose en combinaison d'un corps 100, d'une pièce auxiliaire de renvoi 200, d'un capuchon d'habillage 300 et d'un contrepoids 400 ;

L'aiguille éclairante est par ailleurs associée à un guide optique 500.

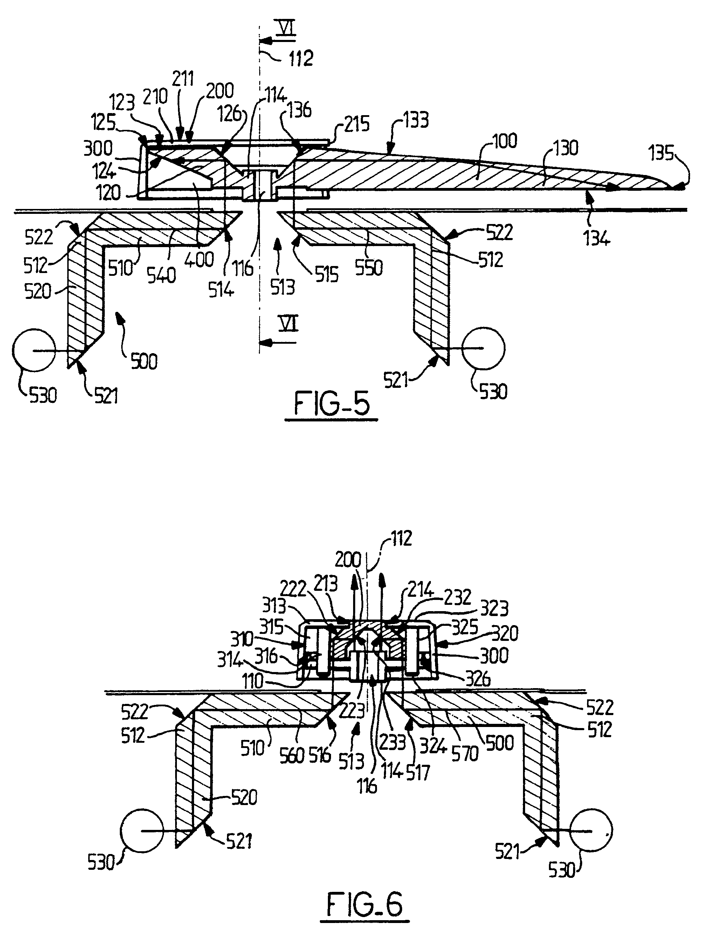

Par la suite on appellera plan principal de symétrie, le plan V-V de coupe de la figure 5. On appellera plan secondaire, le plan VI-VI de coupe de la figure 6. Le plan secondaire VI-VI est orthogonal au plan principal V-V et coupe celui-ci au niveau de l'axe 112.

Le corps 100 de l'aiguille est moulé d'une pièce en un matériau transparent sur le plan optique. Le corps 100 comprend un flasque circulaire 110 centré sur l'axe 112. Le flasque 100 est pourvu d'un canon central 114.

Le canon 114 présente un alésage traversant 116. L'alésage 116 s'étend parallèlement à l'axe 112. Il est destiné à recevoir l'extrémité d'un arbre de commande, pour permettre de chasser l'aiguille sur celui-ci. L'alésage 116 peut être formé d'un alésage cylindrique centré sur l'axe 112. Cependant, de préférence, comme illustré sur les figures annexées, l'alésage 116 est non symétrique de révolution par rapport à l'axe 112, par exemple sensiblement hémicylindrique, pour définir une indexation entre l'aiguille éclairante et l'arbre de commande associé, c'est-à-dire définir une position relative univoque entre ces deux éléments.

Le flasque 110 porte par ailleurs deux index 120, 130 s'étendant sensiblement radialement par rapport à l'axe 112 et diamètralement opposés par rapport à celui-ci. Les index 120, 130 forment le corps proprement dit de l'aiguille. L'index 120 possède une étendue radiale inférieure à celle de l'index 130. Il forme le talon de l'aiguille.

L'index 120 est délimité pour l'essentiel par deux surfaces latérales 121, 122, une surface supérieure 123 et une surface inférieure 124.

Les surfaces 121, 122, 123 et 124 sont planes.

Les surfaces 121, 122 sont parallèles entre elles et parallèles au plan de symétrie principal. La surface supérieure 123 s'étend sensiblement perpendiculairement à l'axe 112. La surface inférieure 124 est inclinée par rapport à l'axe 112. Elle converge vers la surface supérieure 123 en éloignement de l'axe 112. Les surfaces supérieure et inférieure 123, 124, se rejoignent au niveau d'une arête 125 qui détermine le lieu de l'index 120 le plus éloigné de l'axe 112.

L'index 130 est délimité par deux surfaces latérales 131, 132, une surface supérieure 133 et une surface inférieure 134.

Les surfaces 131, 132 ; 133 et 134 sont pour l'essentiel planes.

Les surfaces latérales 131, 132 s'étendent parallèlement à l'axe 112 et sensiblement parallèlement au plan principal de symétrie. Elles convergent légèrement en éloignement de celui-ci, symétriquement par rapport au plan principal.

La surface inférieure 134 de l'index 130 est orthogonale à l'axe 112. La surface supérieure 133 est inclinée légèrement par rapport à l'axe 112. Elle converge vers la surface inférieure 134 en éloignement de l'axe 112. Les surfaces supérieure et inférieure 133, 134 se rejoignent au niveau d'une arête 135 qui détermine le lien de l'index 130 le plus éloigné de l'axe 112.

Les index 120, 130 sont formés en saillie sur la surface supérieure 111 du flasque 110. L'index 120 est limité au niveau de son extrémité radialement interne, la plus proche de l'axe 112, par une surface plane référencée 126. De façon similaire l'index 130 est limité au niveau de son extrémité radialement interne, la plus proche de l'axe 112, par une surface plane référencée 136.

Les surfaces 126, 136 sont symétriques par rapport au plan secondaire précité.

Les surfaces 126, 136 sont inclinées par rapport à l'axe 112. Elles divergent l'une par rapport à l'autre en éloignement du flasque 110 ; soit en rapprochement de surfaces supérieures 123, 133 respectivement associées.

De préférence, les surfaces 126, 136 sont inclinées d'environ 45° par rapport à l'axe 112.

La surface 126 se raccorde à la surface supérieure 123 de l'index 120 au niveau d'une arête 127. La surface 136 se raccorde à la surface supérieure 133 de l'index 130 au niveau d'une arête 137. Les arêtes 127 et 137 sont symétriques par rapport au plan secondaire précité.

Le flasque 110 possède de plus deux orifices traversant 140, 142. Les orifices 140, 142 s'étendent parallèlement à l'axe 112. Ils sont diamètralement opposés par rapport à cet axe et leur centre coïncide avec le plan secondaire précité.

Plus précisément encore selon le mode de réalisation illustré sur les figures annexées, le flasque 110 est évidé. Il est de ce fait constitué d'une nervure annulaire 150 et d'une nervure rectiligne 152.

La nervure annulaire 150 est centrée sur l'axe 112. Elle se raccorde aux surfaces latérales 121, 131, 132 des index 120 et 130. La nervure rectiligne 152 s'étend radialement par rapport à l'axe 112, symétriquement par rapport au plan secondaire. La nervure 152 est formée de deux sections disposées de part et d'autre du canon 114. La nervure 152 relie ainsi la surface périphérique extérieure du canon 114 à la nervure annulaire 150. La nervure 152 est pourvue au niveau de sa zone de raccordement avec la nervure annulaire 150 d'évasement dans lesquels sont ménagés les orifices 140 et 142 précités.

On notera en outre que la surface inférieure 124 de l'index 120 est pourvue d'un téton rectiligne 160 qui s'étend parallèlement à l'axe 112. Le téton 160 possède en section droite considérée transversalement à l'axe 112, un contour rectangulaire.

La pièce auxiliaire de renvoi 200 comprend pour l'essentiel une palette supérieure 210 et deux joues latérales 220, 230.

La palette 210 est plane et rectiligne. Elle est délimitée par une surface supérieure 211, plane et orthogonale à l'axe 112, une surface inférieure 212 plane et parallèle à la surface 211, deux surfaces latérales longitudinales 213, 214 parallèles entre elles et au plan principal de symétrie et orthogonales aux surfaces 211 et 212 et deux surfaces extrêmes 215, 216.

Les joues 220, 230 sont raccordées à la surface inférieure 212 de la palette 210.

Pour l'essentiel, les joues 220, 230 sont délimitées par des surfaces planes s'étendant parallèlement à la direction d'élongation des index 120, 130 et à la direction d'élongation de la palette 210.

Chaque joue 220, 230 comprend deux barrettes 221, 224 d'une part, et 231, 234 d'autre part. Ces barrettes sont monobloc et solidaires de la palette 210 dans la mesure où la pièce auxiliaire de renvoi 200 est moulée d'une pièce, séparément du corps 100, en matériau transparent.

La barrette 221 est délimitée pour l'essentiel par une surface longitudinale supérieure 222 et par une surface longitudinale inférieure 223. Les surfaces 222 et 223 sont planes et parallèles entre elles. Elles s'étendent parallèlement à la direction d'élongation des index 120, 130. Cependant, elles sont inclinées par rapport au plan principal de symétrie précité, et de préférence de l'ordre de 45°.

De façon similaire la barrette 231 est délimitée par une surface longitudinale supérieure 232 et une surface longitudinale inférieure 233. Les surfaces 232 et 233 sont planes et parallèles entre elles. Elles s'étendent parallèlement à la direction d'élongation principale des index 120 et 130. De plus, les surfaces 232 et 233 sont inclinées par rapport au plan principal de symétrie, de préférence de l'ordre de 45°.

Les surfaces longitudinales supérieures 222, 232 servent de surfaces réfléchissantes comme cela sera explicité par la suite. Elles convergent symétriquement vers la surface supérieure 211 de la palette 210. De même, les surfaces longitudinales inférieures 223 et 233 servent de surfaces réfléchissantes. Elles divergent symétriquement en éloignement de la surface supérieure 211 de la palette 210.

Les surfaces 223 et 233 se raccordent au niveau d'une génératrice rectiligne qui coïncide avec le plan principal de symétrie.

Les barrettes 224, 234 prolongent les barrettes 221, 231 à l'opposé de la palette 210. Les barrettes 224 et 234 s'étendent parallèlement au plan principal de symétrie précité soit sensiblement transversalement à l'axe 112. Les barrettes 224, 234 sont délimitées, à l'opposé de la palette 210 par des surfaces inférieures planes 225, 235, coplanaires et transversales à l'axe 112.

Par ailleurs, les barrettes 224, 234 sont pourvues sur leurs surfaces extérieures de secteurs de couronnes 226, 236 dont le rayon coïncide avec celui du flasque 110. La surface inférieure des secteurs 226, 236 coïncide avec la surface inférieure 225, 235 des barrettes 224, 234. Les secteurs 226, 236 sont pourvus chacun d'un orifice traversant 227, 237. Les orifices 227, 237 s'étendent parallèlement à l'axe 112, soit perpendiculairement aux surfaces supérieure et inférieure 211, 212 de la palette 210. Les orifices 227, 237 sont diamètralement opposés par rapport à l'axe 112. Lorsque la pièce auxiliaire de renvoi 200 est placée sur le flasque 110, les orifices 227, 237 coïncident respectivement avec les orifices 140, 142.

De préférence, comme illustré sur les figures annexées, la longueur de la palette 210 est supérieure à la distance séparant les arêtes 127 et 137. De plus, les joues 220, 230 sont décentrées longitudinalement par rapport à la palette 210.

Ainsi, comme illustré sur la figure 5, la palette 210 est adaptée pour recouvrir intégralement la surface supérieure 123 de l'index 120, et chevaucher la zone de la surface supérieure 133 de l'index 130 radialement interne, la plus proche de l'axe 112. Par ailleurs, la longueur des joues 220, 230 considérée parallèlement aux surfaces 211, 212 de la palette 210 et au plan principal de symétrie est supérieure à la distance séparant les arêtes 127 et 137.

En outre, la distance séparant les surfaces 223, 233 de la pièce auxiliaire 200, au niveau de leur zone de raccordement sur la surface inférieure 212 de la palette 210 est inférieure à la distance séparant les surfaces latérales 121, 122 et 131, 132 dans leur zone radialement interne la plus proche de l'axe 112, soit la largeur des index 120, 130 au niveau de leur zone radialement interne.

La surface 126 de l'index 120 se raccorde aux surfaces latérales 121, 122 au niveau d'arêtes 128, 129. La surface supérieure 133 de l'index 130 se raccorde aux surfaces latérales 131, 132 au niveau d'arêtes 138, 139. Les surfaces 223, 233 de la pièce auxiliaire 200 sont adaptées pour reposer contre les arêtes 128, 129, 138, 139 précitées pour définir des moyens de fixation permettant d'immobiliser la pièce auxiliaire de renvoi 200 avec précision sur le corps 100 de l'aiguille.

Plus précisément encore, les moyens de fixation précités comprennent des évidements 170, 171 symétriques par rapport au plan principal ménagés sur les arêtes 128, 129 en position adjacente à l'arête 127. Les moyens de fixation comprennent également des évidements symétriques 172, 173 ménagés sur les arêtes 138, 139 en position adjacente à l'arête 137. Les moyens de fixation précités comprennent encore des évidements 272, 273 ménagés sur les surfaces 223, 233 de la pièce auxiliaire 200, en position adjacente à leur zone de raccordement sur la surface inférieure 212 de la palette 210 et au niveau de leur extrémité longitudinale adjacente à l'arête 137. Ces évidements 272, 273 présentent une forme complémentaire des évidements 172, 173 ménagés sur l'index 130.

Ainsi, lorsque la pièce auxiliaire 200 est engagée sur le corps 100, la palette 210 recouvre la surface supérieure 123 de l'index 120 et chevauche la zone radialement interne de la surface supérieure 133 de l'index 130 ; les joues 220, 230 sont placées de part et d'autre des index 120, 130 ; les évidements 272, 273 ménagés sur la pièce auxiliaire 200 sont engagés dans les évidements complémentaires 172, 173 ménagés sur l'index 130 ; l'extrémité longitudinale des surfaces 223, 233, opposée aux évidements 272, 273 est engagée dans les évidements 170, 171 ménagés sur l'index 120. Ainsi, la pièce auxiliaire 200 est positionnée avec une grande précision par rapport au corps 100.

De préférence, l'aiguille éclairante conforme à la présente invention comporte en outre une contrepoids 400 destiné à être fixé sur le talon ou index 120 afin d'équilibrer l'aiguille par rapport à l'axe 112.

Le contrepoids 400 est formé d'une masselotte 402. Celle-ci est délimitée par une surface supérieure 403, une surface inférieure 404, et deux surfaces latérales 405, 406.

La masselotte est traversée par un alésage 407 rectiligne. L'alésage 407 s'étend parallèlement à l'axe 112. Il possède une section droite complémentaire du téton 160.

Lorsque le téton 160 est engagé dans l'alésage 407, la surface supérieure 403 du contre poids 400 repose contre la surface inférieure 124 de l'index 120. La surface inférieure 404 du contrepoids s'étend perpendiculairement à l'axe 112. Les surfaces latérales 405, 406 du contrepoids 400 sont parallèles entre elles et parallèles aux surfaces latérales 121, 112 de l'index 120.

La masselotte 402 est pourvue au niveau de son extrémité radialement interne d'une fourchette 410 comprenant deux branches 411, 412 destinées à être engagées respectivement de part et d'autre de l'index 120 contre les surfaces latérales 121, 122. Les branches 411, 412 s'étendent pour l'essentiel parallèlement à l'axe 112. Elles sont délimitées sur leur surface radialement interne par rapport à l'axe 112, par un plan 413 parallèle au plan secondaire et complémentaire d'un méplat 117 ménagé sur le flasque 110. Les branches 411, 412 sont délimitées sur leur surface radialement externe par un secteur de cylindre 414 centré sur l'axe 112.

De ce fait, lorsque le contre-poids 400 est engagé sur l'index 120, la surface radialement externe 414 des branches 411, 412 prolonge l'enveloppe cylindrique du flasque 110 et des éléments 225, 235 de la pièce auxiliaire 200.

Comme indiqué précédemment, l'aiguille éclairante conforme à la présente invention se complète d'un capuchon d'habillage 300.

Celui-ci comprend deux coquilles latérales 310, 320 reliées par une pièce de liaison 340. Le capuchon d'habillage 300 possède un plan de symétrie qui coïncide avec le plan principal de symétrie.

Chaque coquille 310, 320 comprend une jupe extérieure 312, 322 cylindrique de révolution autour de l'axe 112. Les jupes 312, 322 couvrent un secteur angulaire inférieur à 180° par rapport à l'axe 112. Ainsi, les jupes 312, 322 définissent en combinaison une enveloppe cylindrique centrée sur l'axe 112, tout en maintenant entre les coquilles 310, 320 un canal longitudinal 350 s'étendant parallèlement au plan principal de symétrie.

Le rayon interne des jupes 312, 322 est complémentaire du rayon externe du flasque 110, de la surface 414 et des éléments 225, 235.

Les jupes 312, 322 sont surmontées d'un voile 313, 323.

Ces voiles sont plans et orthogonaux à l'axe 112. Ils sont de forme générale hémicirculaire. Les voiles 313, 323 supportent sur leur surfaces inférieure de tétons 314, 324. Ces tétons s'étendent parallèlement à l'axe 112. Ils sont diamètralement opposés par rapport à celui-ci et symétriques par rapport au plan principal.

Le téton 314 est adapté pour être engagé dans les alésages 227, 140. De façon symétrique le téton 324 est adapté pour être engagé dans les alésages 237, 142. Les tétons 314, 324 participent au positionnement précis de la pièce auxiliaire 200 sur le corps 100.

En outre, les jupes 312, 322 sont pourvues sur leur surface interne de nervures 315, 325. La surface inférieure 316, 326 des nervures 315, 325 est destinée à reposer contre la surface supérieure des éléments 225, 235.

La pièce de liaison 340 possède en section droite transversale à l'axe 112 la forme d'un U. Elle est formée de trois toiles 341 342, 343, planes et généralement parallèles à l'axe 112. Les toiles 341, 343 sont parallèles entre elles et parallèles au plan principal. Elles sont raccordées respectivement aux jupes 312 et 322. La toile 342 s'étend transversalement aux toiles 341, 343. Elle se raccorde sur celles-ci au niveau de leur extrémité opposée aux jupes 312, 322.

La distance séparant la surface interne de la toile 342, de l'axe 112 correspond sensiblement à la distance séparant l'arête 125 de l'axe 112. Ainsi, l'index 120 peut être engagé dans le canal 350 au niveau de la pièce de liaison 340.

Pour assembler l'aiguille ainsi formée on procède comme suit.

Le contrepoids 400 est engagé sur l'index 120 ; le téton 160 pénétrant dans l'alésage 407 et la fourchette 410 encadrant les surfaces latérales 121, 122. La pièce auxiliaire de renvoi 200 est positionnée sur le corps 100, grâce aux évidement 170 à 173. Les alésages 227 et 140 sont alors alignés. De même les alésages 237 et 142 sont alors alignés. Enfin, le capuchon 300 est chassé sur l'aiguille. La pièce de liaison 340 encadre le talon de la palette 210, l'index 120 et le contrepoids 400 tout en laissant libre la surface supérieure de la palette 210. De même les coquilles 310, 320 du capuchon 300 recouvent les joues 220, 230, le flasque 110 et les branches 441, 412 de la fourche 410. Les coquilles 310, 320 laissent libre la surface supérieure 211 de la palette 210.

De préférence le capuchon 300 est réalisé en un matériau opaque.

La pièce de renvoi 200 et le corps 100 peuvent être réalisés en polyméthacrylate de méthyle ou en polycarbonate.

Par ailleurs, de préférence la surface inférieure 134 de l'index 130 est pourvue d'un état de surface, ou revêtue d'un matériau définissant une surface diffusante.

L'aiguille éclairante conforme à la présente invention est associé à un guide de lumière 500.

Le guide 500 est disposé sur l'arrière de l'aiguille éclairante, autour de l'arbre destiné à être chassé dans l'alésage 116.

Selon la représentation donnée sur les figures annexées, la pièce optique 500 comprend, venue de moulage, une plaque 510 transversale à l'axe 112 et un manchon 520 parallèle à celui-ci.

La zone de raccordement entre la plaque 510 et le manchon 520 est référencée schématiquement 512.

Le manchon 520 est pourvu sur son extrémité axiale opposée à la zone 512, et sur sa surface interne, d'une surface 521 formant surface réfléchissante. La surface 521 est inclinée par rapport à l'axe 112, de préférence de l'ordre de 45°, en convergeant vers l'axe 112 en rapprochement de la plaque 510.

Des sources lumineuses 530 sont placées sur l'extérieur du manchon 520 en regard de la surface 521.

Par ailleurs, la zone 512 de raccordement de la plaque 510 et du manchon 520 est tronquée sur sa surface extérieure par une surface 522 formant également surface réfléchissante. Cette surface 522 est inclinée par rapport à l'axe 112, de préférence de l'ordre de 45°, en divergeant par rapport à l'axe 112 en rapprochement de l'extrémité axiale du manchon 520 pourvue de la surface 521.

En outre, la plaque 510 est pourvue d'un alésage 513 centré sur l'axe 112.

L'alésage 513 a une forme pyramidale délimitée par 4 surfaces 514, 515, 516 et 517. Les surfaces 514 et 515 sont symétriques par rapport au plan secondaire. Elles sont planes et inclinées par rapport à l'axe 112, de préférence de l'ordre de 45°. Elle convergent vers l'axe 112 en rapprochement de l'aiguille éclairante.

De façon similaire, les surfaces 516 et 517 sont symétriques par rapport au plan principal. Elles sont planes et inclinées par rapport à l'axe 112, par exemple de l'ordre de 45°. Elles convergent vers l'axe 112 en rapprochement de l'aiguille éclairante.

On va maintenant décrire le fonctionnement de l'aiguille éclairante conforme à la présente invention en regard notamment des figures 5 et 6 annexées.

Les rayons lumineux issus des sources 530 qui parviennent sur la surface extérieure du manchon 520 du guide de lumière, transversalement à cette surface extérieure, la traversent sans déviation. Les rayons lumineux parviennent sur la surface 521 selon une incidence supérieure à l'angle de réfraction maximal. Ils sont alors déviés parallèlement à l'axe 112 en direction de la surface 522. Ils atteignent celle-ci selon une incidence supérieure à l'angle de réfraction maximal et sont donc déviés en regard des surfaces 514, 515, 516 et 517.

On a référencé 540 les rayons parvenant sur la surface 514 du guide de lumière, 550 les rayons parvenant sur la surface 515 du guide de lumière, 560 les rayons parvenant sur la surface 516 du guide de lumière et 570 les rayons parvenant sur la surface 517 du guide de lumière.

Les rayons 540 arrivent sur la surface 514 selon une incidence supérieure à l'angle maximum de réfraction. Ils sont déviés parallèlement à l'axe 112 en direction de l'aiguille, et plus précisément encore de la surface inférieure du flasque 110 coïncidant avec l'index 120. Les rayons 540 traversent la surface inférieure du flasque 100 sans déviation et parviennent sur la surface 126 de l'index 120 selon une incidence supérieure à l'angle de réfraction maximale. Ils sont déviés vers l'arrière de l'aiguille, à l'intérieur de l'index 120, transversalement à l'axe 112 en direction de la surface inférieure 124 de cet index. les rayons 540 atteignent la surface 124 de l'index 120 selon une incidence supérieure à l'angle de réfraction maximale. Ils sont alors déviés en direction de la surface supérieure 123 et de la palette 210, pour éclairer la zone de la palette 210 placée en regard de la surface supérieure de l'index 120.

Les rayons 550 parviennent sur la surface 515 selon une incidence supérieure à l'angle de réfraction maximale. Ils ont déviés en direction de l'aiguille parallèlement à l'axe 112. Plus précisément, les rayons 550 sot dirigés par la surface 515 en direction de la surface inférieure du flasque 110 sous-jacente à l'index 130. Les rayons 550 traversent la surface inférieure du flasque 110 sans déviation. Ils atteignent la surface 136 de l'index 130 selon une incidence supérieure à l'angle de réfraction maximale. Les rayons 550 sont déviés par la surface 136 en direction de la surface supérieure 133 de l'index 130. Les rayons 550 atteignent la surface 133 selon une incidence supérieure à l'angle de réfraction maximale. Ils sont déviés en regard de la surface inférieure 134 de l'index 130. La surface 134 étant diffusante l'index 130 est éclairé.

Les rayons 560 et 570 atteignent les surfaces 516, 517 selon une incidence supérieure à l'angle de réfraction maximale. Ils sont déviés parallèlement à l'axe 112 en direction de l'aiguille. Les rayons 560, 570 traversent sans déviation la nervure 152 du flasque 110 ou la surface inférieure 226, 236 des joues 220, 230.

Les rayons 560, 570 atteignent ainsi les surfaces 222, 232 de la pièce auxiliaire 200 selon une incidence supérieure à l'angle de réfraction maximale. Les rayons 560, 570 sont déviés transversalement à l'axe 112 en regard des surfaces 223, 233 de la pièce auxiliaire 200. Ils atteignent celles-ci selon une incidence supérieure à l'angle de réfraction maximale et sont par conséquent déviés parallèlement à l'axe 112 en direction de la surface supérieure 211 de la palette 210. Les rayons 560, 570 permettent par conséquent d'éclairer la zone de la palette 210 superposée aux joues 220, 230.

L'homme de l'art comprendra aisément qu'ainsi l'aiguille conformes à la présente invention est éclairée sur la totalité de sa longueur.

Le corps 100, la pièce auxiliaire 200, le capuchon 300 et le contrepoids 400 conformes à la présente invention peuvent être réalisés par moulage, sans nécessiter l'utilisation d'un moule à tiroir, dans la mesure où ils ne présentent aucune contre-dépouille.

Le cas échéant les surfaces 514, 515, 516 et 517 intégrées au guide optique 500 selon le mode de réalisation représenté sur les figures annexées, pourraient être ménagées sur la surface inférieure du flasque 110, comme cela est connu en soi de l'homme de l'art et tel qu'illustré schématiquement sur la figure 1 annexée par la surface 14. Dans un tel cas, l'alésage 513 ménagé dans le guide optique 500 devrait être délimité par des génératrices parallèles à l'axe 112.

Par ailleurs, le cas échéant, la surface supérieure 133 de l'index et 130 pourrait être orthogonale à l'axe 112, la surface 134 étant alors inclinée par rapport à l'axe 112 pour converger par rapport à la surface supérieure 133 en direction de l'arête 135. Dans ce cas, les rayons 550 seraient réfléchis en direction de la surface inférieure 134 par la surface 136. Cette surface 134 pourrait être diffusante. En variante, la surface inférieure 134 pourrait être réfléchissante afin de renvoyer les rayons 550 en direction de la surface supérieure 133 elle-même diffusante.

Le cas échéant, les surfaces 124, 134, inférieures des index les surfaces réfléchissantes 223, 233 de la pièce de renvoi peuvent être partiellement diffusantes pour assurer un éclairage homogène de l'aiguille.

De préférence, la surface inférieure 134 de l'index principal et la surface supérieure 211 de la pièce de renvoi sont pourvues d'un revêtement de couleur, avantageusement opaque pour la surface 134 et au moins partiellement transparent pour la surface 211.

Par ailleurs, selon le mode de réalisation précédemment décrit, les index 120 et 130 sont solidaires du corps 100. En variante, les index 120, 130 pourraient être rendus solidaires, venus de moulage, de la pièce auxiliaire de renvoi 200. Pour cela, par rapport au mode de réalisation précédemment décrit et illustré sur les figures annexées, le corps 100 serait délimité en périphérie par deux plans parallèles à l'axe 112 et passant par les génératrices 127, 137. Ces deux plans délimiteraient le lieu radialement le plus externe du corps 100. Les index 120, 130 seraient raccordés à la pièce auxiliaire de renvoi 200. La surface radialement interne des index 120, 130 serait délimitée par des plans complémentaires des plans précités prévus sur le corps 100.

## Revendications

1. Aiguille éclairante comprenant :
   – un corps (100) moulé en matériau transparent, comprenant, venu de moulage un moyeu (110) intermédiaire, et pourvu à proximité du moyeu de deux surfaces transversales opposées (126, 136), servant de surfaces réfléchissantes qui divergent vers la surface supérieure de l'aiguille, et
   – une pièce auxiliaire de renvoi (200) moulée, séparément du corps (100), en matériau transparent, comprenant une première paire de surfaces longitudinales supérieures (222, 232), servant de surfaces réfléchissantes qui convergent vers la surface supérieure de l'aiguille, une seconde paire de surfaces longitudinales inférieures (223, 233) servant de surfaces réfléchissantes qui divergent en éloignement de la surface supérieure de l'aiguille, et des moyens de fixation (170, 171, 172, 173 ; 272, 273 ; 314, 324) permettant d'immobiliser la pièce auxiliaire de renvoi (200) avec précision sur le corps (100) à proximité du moyeu (110).

2. Aiguille éclairante selon la revendication 1, caractérisée par le fait que les surfaces transversales opposées (126, 136), servant de surfaces réfléchissantes, formées sur le corps (100), sont planes.

3. Aiguille éclairante selon la revendication 2, caractérisée par le fait que les surfaces transversales (126, 136) servant de surfaces réfléchissantes, ménagées sur le corps (100), sont inclinées de l'ordre de 45° par rapport à l'axe (112) de rotation de l'aiguille.

4. Aiguille éclairante selon l'une des revendications 1 à 3, caractérisée par le fait que les surfaces longitudinales (222, 223 ; 232, 233) servant de surfaces réfléchissantes, ménagées sur la pièce auxiliaire (200) sont planes.

5. Aiguille éclairante selon la revendication 4, caractérisée par le fait que les surfaces longitudinales (222, 223 ; 232, 233) servant de surfaces réfléchissante, ménagées sur la pièce auxiliaire (200), sont inclinées de l'ordre de 45° par rapport à l'axe (112) de rotation de l'aiguille.

6. Aiguille éclairante selon l'une des revendications 1 à 5, caractérisée par le fait que l'un au moins du corps (100) et de la pièce auxiliaire (200) est réalisé en polyméthacrylate de méthyle.

7. Aiguille éclairante selon l'une des revendications 1 à 6, caractérisée par le fait que l'un au moins du corps (100) et de la pièce auxiliaire (200) est réalisé en polycarbonate transparent.

8. Aiguille éclairante selon l'une des revendications 1 à 7, caractérisée par le fait que le corps (100) comprend un moyeu formé d'un flasque (110) centré sur l'axe (112) de rotation de l'aiguille et pourvu d'un canon (114) possédant un alésage traversant (116) apte à recevoir un arbre de commande, et deux index (120, 130) s'étendant sensiblement radialement par rapport à l'axe (112) de rotation, en étant diamétralement opposés par rapport à celui-ci et raccordés au flasque (110).

9. Aiguille éclairante selon l'une des revendications 1 à 8, caractérisée par le fait que la pièce auxiliaire (200) est formée d'une palette supérieure plane (210) destinée à recouvrir au moins en partie l'un des index (120, 130) et deux joues latérales sous-jacentes (220, 230), pourvues chacune d'une surface longitudinale supérieure (222, 232) servant de surface réfléchissante et d'une surface longitudinale inférieure (223, 233) servant de surface réfléchissante.

10. Aiguille éclairante selon la revendication 9, caractérisée par le fait que la palette (210) est adaptée pour recouvrir la totalité de la surface supérieure (123) d'un index (120) formant talon solidaire du corps (100) et chevaucher la zone radialement la plus interne de la surface supérieure (133) d'un index principal (130) solidaire du corps (100).

11. Aiguille éclairante selon l'une des revendications 1 à 7, caractérisée par le fait que le corps (100) comprend un moyeu pourvu d'un canon (114) possédant un alésage traversant (116) apte à recevoir un arbre de commande et par le fait que la pièce auxiliaire de renvoi est pourvue de deux index (120, 130) s'étendant sensiblement radialement par rapport à l'axe (112) de rotation, en étant diamètralement opposés par rapport à celui-ci.

12. Aiguille éclairante selon l'une des revendications 1 à 11, caractérisée par le fait qu'il comprend en outre un capuchon d'habillage (300) comprenant deux coquilles latérales (310, 320), reliées par une pièce de liaison (340) de telle sorte que les coquilles (310, 320) soient séparées par un canal (350) afin que le capuchon recouvre le moyeu (110) du corps et les faces latérales du talon de l'aiguille tout en laissant libre la surface supérieure de l'aiguille, sur la totalité de sa longueur.

13. Aiguille éclairante selon l'une des revendications 12 caractérisée par le fait que les coquilles latérales (310, 320) du capuchon (300) sont formés de secteurs cylindriques.

14. Aiguille éclairante selon l'une des revendications 1 à 13, caractérisée par le fait que le capuchon (300) est réalisé en matériau opaque.

15. Aiguille éclairante selon l'une des revendications 1 à 14, caractérisée par le fait qu'elle comprend en outre un contrepoids (400) adapté pour être fixé sur le talon (120) de l'aiguille.

16. Aiguille éclairante selon l'une des revendications 1 à 15, caractérisée par le fait que les moyens de fixation comprennent des évidements (170, 171, 172, 173) réalisés sur des arêtes (128, 129, 138, 139) du corps (100) à proximité des surfaces transversales (126, 136), contre lesquelles sont adaptées pour reposer des formes homologues (272, 273) ménagées aux extrémités des surfaces longitudinales inférieures réfléchissantes (223, 233) de la pièce auxiliaire (200).

17. Aiguille éclairante selon l'une des revendications 1 à 16, caractérisée par le fait que les moyens de fixation comprennent au moins un téton (314, 324) solidaire d'un capuchon (300) et adapté pour pénétrer dans des alésages (227, 237, 140, 142) superposés ménagés dans la pièce auxiliaire (200) et le corps (100).

## Patentansprüche

1. Leuchtzeiger mit
– einem aus transparentem Werkstoff geformten Körper (100), der aufgrund des Formvorganges eine Zwischennabe (110) umfaßt und in der Nähe der Nabe mit zwei einander gegenüberliegenden Querflächen (126, 136) versehen ist, die als reflektierende Flächen dienen und zur Oberseite des Zeigers hin divergieren, und
– einem separat vom Körper (100) aus transparentem Werkstoff geformten Umlenk-Hilfsteil (200), das ein erstes Paar oberer Längsflächen (222, 232), die als reflektierende Flächen dienen und zur Oberseite des Zeigers hin konvergieren, sowie ein zweites Paar unterer Längsflächen (223, 233), die als reflektierende Flächen dienen und sich von der Oberseite des Zeigers entfernend divergieren, umfasst, und
– Befestigungsmitteln (170, 171, 172, 173 ; 272, 273 ; 314, 324) zur Präzisionsverriegelung des Umlenk-Hilfsteils (200) am Körper (100) in der Nähe der Nabe (110).

2. Leuchtzeiger nach Anspruch 1, dadurch gekennzeichnet, daß die einander gegenüberliegenden Querflächen (126, 136), die als reflektierende Flächen dienen und am Körper (100) ausgebildet sind, plan sind.

3. Leuchtzeiger nach Anspruch 2, dadurch gekennzeichnet, daß die Querflächen (126, 136), die als reflektierende Flächen dienen und am Körper (100) ausgespart sind, mit Bezug auf die Drehachse (112) des Zeigers in der Größenordnung von 45° geneigt sind.

4. Leuchtzeiger nach einem der Ansprüche 1-3, dadurch gekennzeichnet, daß die Längsflächen (222, 223 ; 232, 233), die als reflektierende Flächen dienen und am Hilfsteil (200) ausgespart sind, plan sind.

5. Leuchtzeiger nach Anspruch 4, dadurch gekennzeichnet, daß die Längsflächen (222, 223 ; 232, 233), die als reflektierende Flächen dienen und am Hilfsteil (200) ausgespart sind, mit Bezug auf die Drehachse (112) des Zeigers in der Größenordnung von 45° geneigt sind.

6. Leuchtzeiger nach einem der Ansprüche 1-5, dadurch gekennzeichnet, daß wenigstens der Körper (100) und das Hilfsteil (200) aus Polymethylmethacrylat gefertigt sind.

7. Leuchtzeiger nach einem der Ansprüche 1-6, dadurch gekennzeichnet, daß wenigstens der Körper (100) und das Hilfsteil (200) aus transparentem Polycarbonat gefertigt sind.

8. Leuchtzeiger nach einem der Ansprüche 1-7, dadurch gekennzeichnet, daß der Körper (100) eine von einem auf der Drehachse (112) des Zeigers zentrierten Flansch (110) gebildete Nabe umfasst, die mit einer eine durchgehende Bohrung (116) zur Aufnahme einer Steuerwelle besitzenden Hülse (114) sowie mit zwei Zeigerabschnitten (120, 130) versehen ist, welche sich mit Bezug auf die Drehachse (112) im wesentlichen radial erstrecken und mit Bezug auf diese Achse einander diametral einander gegenüberliegend mit dem Flansch (110) verbunden sind.

9. Leuchtzeiger nach einem der Ansprüche 1-8, dadurch gekennzeichnet, daß das Hilfsteil (200) von einer oberen, planen Palette (210) gebildet ist, die dazu dient, wenigstens teilweise den einen der Zeigerabschnitte (120, 130) zu überdecken, sowie von zwei seitlichen, darunter liegenden Wangen (220, 230), die jeweils mit einer oberen Längsfläche (222, 232), die als refektierende Fläche dient, sowie mit einer unteren Längsfläche (223, 233), die als reflektierende Fläche dient, versehen sind.

10. Leuchtzeiger nach Anspruch 9, dadurch gekennzeichnet, daß die Palette (210) befähigt ist, die gesamte Oberseite (123) eines Zeigerabschnittes (120) zu überdecken, der das mit dem Körper (100) verbundene hintere Zeigerende bildet, und die radial zu innerst gelegene Oberseite (133) eines Haupt-Zeigerabschnitts (130) zu überragen, der mit dem Körper (100) verbunden ist.

11. Leuchtzeiger nach einem der Ansprüche 1-7, dadurch gekennzeichnet, daß der Körper (100) eine mit einer Hülse (114) versehene Nabe aufweist, wobei die Hülse eine durchgehende Bohrung (116) zur Aufnahme einer Steuerwelle aufweist, und dadurch, das das Umlenk-Hilfsteil mit zwei Zeigerabschnitten (120, 130) versehen ist, die sich mit Bezug auf die Drehachse (112) im wesentlichen radial erstrecken und mit Bezug auf diese Ache einander diametral gegenüberliegen.

12. Leuchtzeiger nach einem der Anprüche 1-11, dadurch gekennzeichnet, daß er außerdem eine Verkleidungskappe (300) umfasst, die zwei seitliche Schalen (310, 320) aufweisen, welche ihrerseits durch ein Verbindungsteil (340) derart miteinander verbunden sind, daß die Schalen (310, 320) durch einen Kanal (350) getrennt sind, so daß die Kappe die Nabe (110) des Körpers und die seitlichen Flächen des hinteren Zeigerendes überdeckt und dabei die Oberseite des Zeigers über deren ganze Länge hinweg frei läßt.

13. Leuchtzeiger nach Anspruch 12, dadurch gekennzeichnet, daß die seitlichen Schalen (310, 320) der Kappe (300) von zylindrischen Sektoren gebildet sind.

14. Leuchtzeiger nach einem der Ansprüche 1-13, dadurch gekennzeichnet, daß die Kappe (300) aus undurchsichtigem Werkstoff gefertigt ist.

15. Leuchtzeiger nach einem der Ansprüche 1-14, dadurch gekennzeichnet, daß er außerdem ein Gegengewicht (400) umfasst, das am hinteren Ende (120) des Zeigers befestigbar ist.

16. Leuchtzeiger nach einem der Ansprüche 1-15, dadurch gekennzeichnet, daß die Befestigungsmittel an den Kanten (128, 129, 138, 139) des Körpers (100) in der Nähe der Querflächen (126, 136) ausgebildete Ausnehmungen (170, 171, 172, 173) umfassen, gegen welche homologe Formen (272, 273) anlegbar sind, die an den Enden der unteren, reflektierenden Längsflächen (223, 233) des Hilfsteils (200) ausgespart sind.

17. Leuchtzeiger nach einem der Ansprüche 1-16, dadurch gekennzeichnet, daß die Befestigungsmittel wenigstens einen Ansatzzapfen (314, 324) umfassen, der mit einer Kappe (300) verbunden und befähigt ist, in die übereinanderliegenden Bohrungen (227, 237, 140, 142) einzudringen, welche ihrerseits im Hilfsteil (200) und dem Körper (100) ausgespart sind.

## Claims

1. Illuminated pointer comprising :
   – a body (100) moulded from transparent material, comprising, cast in one piece, an intermediate hub (110), and provided in the vicinity of the hub with two opposing transverse surfaces (126, 136), serving as reflecting surfaces which diverge towards the upper surface of the pointer, and

– an auxiliary return part (200) moulded, separately from the body (100), from transparent material, comprising a first pair of upper longitudinal surfaces (222, 232), serving as reflecting surfaces which converge towards the upper surface of the pointer, a second pair of lower longitudinal surfaces (223, 233) serving as reflecting surfaces which diverge as the distance from the upper surface of the pointer increases, and fixing means (170, 171, 172, 173 ; 272, 273 ; 314, 324) making it possible to immobilise the auxiliary return part (200) with precision on the body (100) in the vicinity of the hub (110).

2. Illuminated pointer according to Claim 1, characterised by the fact that the opposing transverse surfaces (126, 136), serving as reflecting surfaces, formed on the body (100), are flat.

3. Illuminated pointer according to Claim 2, characterised by the fact that the transverse surfaces (126, 136) serving as reflecting surfaces, provided on the body (100), are inclined by the order of 45° with respect to the axis (112) of rotation of the pointer.

4. Illuminated pointer according to one of Claims 1 to 3, characterised by the fact that the longitudinal surfaces (222, 223 ; 232, 233) serving as reflecting surfaces, provided on the auxiliary part (200), are flat.

5. Illuminated pointer according to Claim 4, characterised by the fact that the longitudinal surfaces (222, 223 ; 232, 233) serving as reflecting surfaces, provided on the auxiliary part (200), are inclined by the order of 45° with respect to the axis (112) of rotation of the pointer.

6. Illuminated pointer according to one of Claims 1 to 5, characterised by the fact that at least one of the body (100) and of the auxiliary part (200) is produced from methyl polymethacrylate.

7. Illuminated pointer according to one of Claims 1 to 6, characterised by the fact that at least one of the body (100) and of the auxiliary part (200) is produced from transparent polycarbonate.

8. Illuminated pointer according to one of Claims 1 to 7, characterised by the fact that the body (100) comprises a hub formed by a cheek (110) centered on the axis (112) of rotation of the pointer and provided with a barrel (114) comprising a through-hole (116) able to receive a control shaft, and two fingers (120, 130) extending substantially radially with respect to the axis (112) of rotation, whilst being diametrically opposed with respect to the latter and connected to the cheek (110).

9. Illuminated pointer according to one of Claims 1 to 8, characterised by the fact that the auxiliary part (200) is formed by a flat upper plate (210) intended to cover at least partly one of the fingers (120, 130) and two underlying lateral cheeks (220, 230), each provided with an upper longitudinal surface (222, 232) serving as a reflecting surface and with a lower longitudinal surface (223, 233) serving as a reflecting surface.

10. Illuminated pointer according to Claim 9, characterised by the fact that the plate (210) is adapted to cover the entire upper surface (123) of a finger (120) forming a heel integral with the body (100) and to overlap the radially innermost area of the upper surface (133) of a main finger (130) integral with the body (100).

11. Illuminated pointer according to one of Claims 1 to 7, characterised by the fact that the body (100) comprises a hub provided with a barrel (114) having a through-hole (116) able to receive a control shaft and by the fact that the auxiliary return part is provided with two fingers (120, 130) extending substantially radially with respect to the axis (112) of rotation, whilst being diametrically opposed with respect to the latter.

12. Illuminated pointer according to one of Claims 1 to 11, characterised by the fact that it also comprises a covering cap (300) comprising two lateral shells (310, 320), connected by a connecting part (340) so that the shells (310, 320) are separated by a channel (350) in order that the cap covers the hub (110) of the body and the side faces of the heel of the pointer whilst leaving the upper surface of the pointer exposed over its entire length.

13. Illuminated pointer according to Claim 12, characterised by the fact that the lateral shells (310, 320) of the cover (300) are formed by cylindrical sectors.

14. Illuminated pointer according to one of Claims 1 to 13, characterised by the fact that the cover (300) is produced from opaque material.

15. Illuminated pointer according to one of Claims 1 to 14, characterised by the fact that it also comprises a counterweight (400) adapted to be fixed onto the heel (120) of the pointer.

16. Illuminated pointer according to one of Claims 1 to 15, characterised by the fact that fixing means comprise recesses (170, 171, 172, 173) produced on edges (128, 129, 138, 139) of the body (100) in the vicinity of the transverse surfaces (126, 136), against which there are adapted to rest homologous shapes (272, 273) provided at the ends of the reflecting lower, longitudinal surfaces (223, 233) of the auxiliary part (200).

17. Illuminated pointer according to one of Claims 1 to 16, characterised by the fact that the fixing means comprise at least one lug (314, 328) integral with a cover (300) and adapted to penetrate superimposed bores (227, 237, 140, 142) provided in the auxiliary part (200) and the body (100).

# Etat de la Technique

**FIG. 1**

**FIG. 2A**

**FIG. 2B**

FIG.3

FIG_4

FIG-5

FIG-6